# EUROPEAN PATENT APPLICATION

(11) **EP 1 108 807 A1**
(43) Date of publication of application: **20.06.2001**
(21) Application number: 99204376.0
(22) Date of filing: 17.12.1999
(51) Int. Cl.: D04H 1/54

(54) **Method of imparting strenght to a moquette carpet**

(71) Applicant: Benifin Anstalt, 9490 Vaduz (LI)
(72) Inventor: Zigerlig, Max, 6900 Lugano (CH)
(74) Representative: Fiammenghi-Domenighetti, Delfina

(57) **Abstract**

A method is described for imparting mechanical strength to a carpet of "needle moquette" made from threads of synthetic fibres by the application, on the unseen side (1n) of the carpet (1), of a reinforcing and compacting film (2) of predetermined thickness (S); the said film (2) is obtained by thermoplastic fusion of the outermost layer (2) of the said unseen side (ln) of the said carpet (1) to a depth equal to the said thickness (S).

## Description

The present invention relates to the technological sector involved in the manufacture of carpets in moquette called "agugliata" (needle moquette), i.e. of the type formed from fibres and staples of synthetic resins brought close together and compressed so as to form a flat layer, but without really intertwining them. This type of moquette carpet, if no further treatment is applied, has insignificant tensile strength and tear resistance, and therefore would be difficult to use as a covering material.

To make possible its use for floor coverings, for making carpeting for cars or for other similar uses, according to the present state of the art, a reinforcing and compacting film is applied to the unseen side of the carpet, and this film adheres to the fibres and staples of synthetic resin, locking them and compacting them so that the said carpet is endowed with the desired mechanical strength.

The said film consists of synthetic resins "filled" with various chemical compounds, for example calcium carbonate, and is applied to the unseen side of the moquette carpet in the fluid state, which takes place by coating and spreading in suitably equipped workshop units. Application of the said film therefore requires long and consequently costly preliminary operations comprising mixing of the chemical components, their application, regular and frequent cleaning of the equipment etc., which of course increases the costs of production of a "needle moquette" carpet.

In addition to this first shortcoming, there is another drawback of an environmental nature, since the type of moquette carpet in question, on account of the presence of the layer described above, is no longer constituted of one homogeneous and recyclable element, such as polypropylene or similar plastics, but instead has a mixture of chemical compounds, making recycling impossible.

This makes it necessary for worn or used "needle moquette" carpets to be sent to waste dumps and to be destroyed, aggravating the environmental problems connected with the destruction of waste synthetic materials. To assess the size of the problem, consider that moquette carpets of the type in question, owing to their limited useful life and their low cost, are usually employed in large quantities for covering the walking areas of exhibitions and fairs, and are then removed immediately at the end of the events, and are sent for destruction. This would not be necessary if the said carpets could be recycled as a starting material for making, for example, plastics mouldings, plastics containers for fruit and vegetables, car and motorcycle bodies and bumpers etc.

To eliminate all the drawbacks listed above, and produce a "needle moquette" carpet in completely recyclable synthetic fibres, the present inventor has devised a method by which no external reinforcing and compacting layer of "foreign" material is applied to a carpet: the said layer is instead obtained by thermoplastic fusion of the outer layer of the carpet itself, corresponding to its unseen side.

Thus, the object of the present invention is a method of imparting mechanical strength to carpets of "needle moquette" as described in the preamble of the attached Claim 1 characterized by the characterizing part of the said Claim. A "needle moquette" carpet produced in accordance with the said method also forms part of the object of the invention.

There now follows a more detailed description of a preferred example of carrying out the method of the invention, for which reference will also be made to the accompanying drawings, where:
- Fig. 1 is a schematic representation of the transverse section of a preferred example of a production unit for carrying out the method of the invention;
- Fig. 2 shows the transverse section of a "needle moquette" carpet with a reinforcing film obtained according to the present state of the art;
- Fig. 3 shows the transverse section of a "needle moquette" carpet with a reinforcing film made according to the method of the invention.

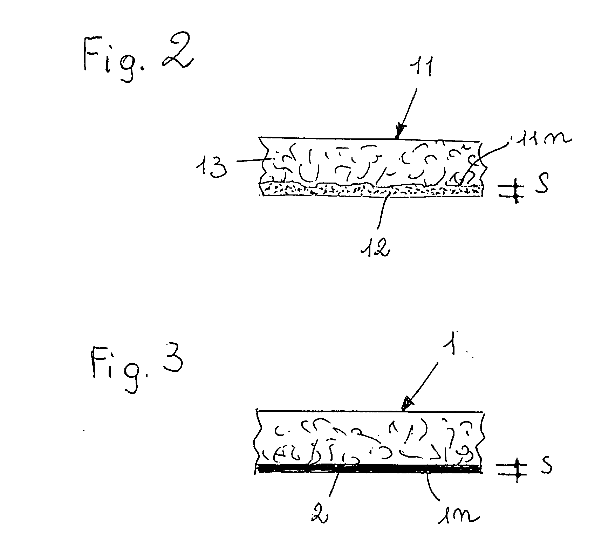

Considering firstly Fig. 2, this shows the transverse section of a carpet 11 of "needle moquette" made according to the present state of the art, which is composed of a layer 13 consisting of fibres and staples of synthetic resin (usually polypropylene or resins or plastics with similar characteristics), where another reinforcing and compacting film 12 of thickness S is applied to the side 11n that is intended to remain out of sight. In view of the relative density of the various chemical components involved, the said film 12 ends up with a weight per unit area roughly equal to that of layer 13 of "needle moquette", with resultant doubling of the overall weight per unit area of carpet 11.

On the other hand, it can be seen in Fig. 2 that a carpet 1 of "needle moquette" made by the method of the invention does not have any additional layer: the required reinforcing and compacting film 2 is in fact none other than the outermost layer of carpet 1, corresponding to its unseen side 1n, fused thermoplastically to a desired depth S equal to the desired final thickness for the said film 2.

Therefore carpet 1, with equal total thickness, is much lighter than that made with conventional systems.

To carry out the method of the invention, and obtain the carpet 1 described above, there are various possible procedures: the important point is to transmit to its unseen side 1n, the appropriate amount of heat to cause thermoplastic fusion of an outer layer thereof of thickness S, then cause it to cool and harden before proceeding to wind the finished carpet onto rolls or reels.

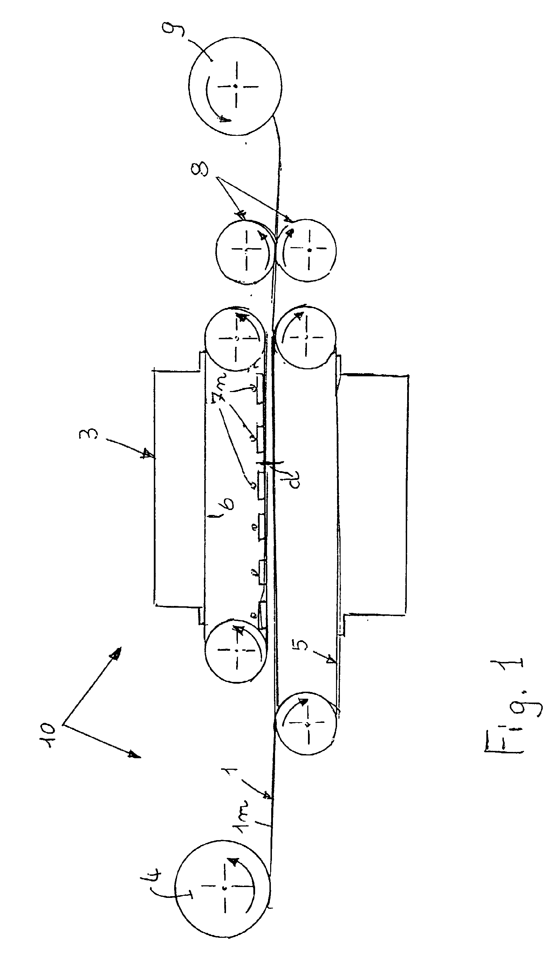

An example of accomplishment of equipment suggested by the inventor for carrying out the method according to the invention is shown in Fig. 1: the said equipment 10 is made up of a stove 3 in which a roller belt 6 is made to move close to a large number of heating elements 7n; the said belt 6 transfers, by irradiation and convection (at temperatures between 150° and 230°C, depending on the speed of movement of the carpet) the heat absorbed to the "needle moquette" carpet 1 on its side that is intended to remain out of sight, while the latter moves through the said stove 3, in parallel and at a distance d relative to the said belt 6, under the action of a conveyor belt 5, also on rollers, onto which it is carefully laid.

The carpet in the "raw" state is unwound from a feed spool 4, and rewound onto a receiving spool 9 when it has cooled and has hardened sufficiently.

To speed up the cooling of carpet 1 in the form of a belt after it emerges from stove 3, at the same time modifying the surface finish of the thermoplastically fused layer 2, the inventor suggests installing, immediately downstream of stove 3, a calendering/ embossing unit 8, water-cooled if necessary.

In this way it is possible to speed up the process of the cooling and hardening of carpet 1 of "needle moquette" made according to the invention, increasing, for example by providing reeding or embossing, the characteristics of adherence of the unseen side In on the surfaces on which it is applied.

It is obvious that the method according to the invention can be carried out with equipment and/or systems different from that shown above: methods thus carried out, but always derived from the teaching of the accompanying Claim 1, will however remain within the scope of protection of the present patent application.

## Claims

1. A method of imparting mechanical strength to a carpet of "needle moquette" obtained with threads of synthetic fibres by the application, on the unseen side (1n) of the carpet (1), of a reinforcing and compacting film (2) of predetermined thickness (S) characterized in that the said film (2) is obtained by thermoplastic fusion of the outermost layer (2) of the said unseen side (1n) of the said carpet (1) to a depth equal to the said thickness (S).

2. A method according to Claim 1, in which:
• the said carpet (1) of "needle moquette" in the form of a belt is caused to pass through a stove (3) in which sufficient heat is transferred to one (1n) of its sides to cause thermoplastic fusion of an outer layer (2) of the desired thickness (S);
• the unseen side (In) of the said carpet (1) in the form of a belt is caused to cool and harden after the said carpet (1) emerges from the said stove (3).

3. A method according to Claim 2, in which the said carpet (1) in the form of a belt, immediately after its emergence from the said stove (3), is submitted to calendering and/or embossing on the said thermoplastically fused side (1n) before it cools and hardens.

4. A carpet (1) of "needle moquette" that has, on its unseen side (1n), a reinforcing and compacting film (r) of predetermined thickness (S), characterized in that the said film consists of the outer layer (2) of the said object corresponding to the said thermoplastically fused side (In) to a depth equal to the said thickness (S).

5. A carpet according to Claim 4, characterized in that it is made of polypropylene.
